Europäisches Patentamt

European Patent Office

Office européen des brevets

(19)

(11) Veröffentlichungsnummer: **0 086 359**
**B1**

(12) **EUROPÄISCHE PATENTSCHRIFT**

(45) Veröffentlichungstag der Patentschrift:
**19.11.87**

(21) Anmeldenummer: **83100638.2**

(22) Anmeldetag: **25.01.83**

(51) Int. Cl.⁴: **F 16 L 47/02, B 29 C 65/22**

(54) **Vorrichtung zum Einbetten eines elektrischen Heizdrahtes in einen muffenartigen Kunststoffteil.**

(30) Priorität: **11.02.82 DE 3204681**

(43) Veröffentlichungstag der Anmeldung:
**24.08.83 Patentblatt 83/34**

(45) Bekanntmachung des Hinweises auf die Patenterteilung:
**19.11.87 Patentblatt 87/47**

(84) Benannte Vertragsstaaten:
**AT BE CH FR GB IT LI LU NL SE**

(56) Entgegenhaltungen:
**EP - A - 0 002 799**
**WO - A - 82/00699**
**CH - A - 515 449**
**CH - A - 544 906**
**DE - A - 1 048 106**
**DE - A - 1 117 297**
**DE - A - 2 145 163**
**DE - A - 2 260 655**
**FR - A - 2 153 841**
**FR - A - 2 284 412**
**FR - A - 2 335 325**
**GB - A - 128 120**
**NL - A - 7 906 592**
**US - A - 3 940 845**

(73) Patentinhaber: **Friedrichsfeld GmbH Keramik- und Kunststoffwerke, Steinzeugstrasse 50,
D-6800 Mannheim 71 (DE)**

(72) Erfinder: **Sichler, Wolfgang, Sinsheimer Strasse 20,
D-6800 Mannheim 61 (DE)**

(74) Vertreter: **Betzler, Eduard, Dipl.-Phys. et al,
Postfach 70 02 09 Plinganserstrasse 18a,
D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung gemäss dem Oberbegriff von Patentanspruch 1.

Es sind elektrisch schweissbare Rohrmuffen aus Kunststoff bekannt (CH-PS 515 449), welche eine eingebettete Heizdrahtwendel aufweisen, deren Enden in Kontaktbuchsen münden. Durch Stromzufuhr wird Widerstandswärme erzeugt, so dass das Material der Rohrmuffe wie auch das des in die Rohrmuffe eingesteckten Rohres erwärmt und die beiden Teile dadurch miteinander verschweisst werden. Die direkte Lage der Heizdrahtwendel an den Berührungsflächen von Rohrmuffe und Rohr gewährleistet eine optimale Wärmeübertragung und -strömung während des gesamten Schweissvorgangs, wodurch in kurzer Zeit die Rohrmuffe und das Rohr zuverlässig und dauerhaft verbunden werden. Zum Einbetten des Heizdrahtes wird in die Innenfläche der Muffe eine Rille eingedreht, in welche schliesslich der Heizdraht eingelegt wird. Um einen Berührungsschutz zu erzielen, werden bei der bekannten Muffe die Rillenkämme mit Hilfe eines Dornes oder einer Walze unter Zuführung von Wärme durch Heissgas oder durch elektrische Energie plastisch deformiert, so dass der in die Rillen eingelegte Heizdraht mindestens teilweise zungenartig überlappt und dadurch in der Rille gehalten wird. Das blosse Einlegen des Heizdrahtes in einer Rille birgt die Gefahr in sich, dass der Draht beim Einschieben der Rohrenden an der Stirnseite der Muffe austritt oder dass die Windungen des Heizdrahtes aus den entsprechenden Rillen herausgedrückt und somit der Abstand der Windungen des Heizdrahtes verändert wird. Dies hat zur Folge, dass eine einwandfreie Schweissverbindung nicht gewährleistet wird. Deswegen ist es erforderlich, den in eine Rille eingelegten Heizdraht zu fixieren, was durch Kleben oder durch plastische Verformung der Rillenwände erfolgen kann. Dadurch ergibt sich verfahrensmässig jedoch ein zusätzlicher Aufwand. Bei einer versenkten Anordnung des Heizdrahts in der Rille, insbesondere aber auch aufgrund verbleibender Hohlräume, entsteht zwischen Rohr und Heizdraht ein Luftpolster, welches als Isolierelement sich für den Schweissvorgang ungünstig auswirkt. Ferner wird bereits mit Beginn des Schmelzvorganges des Rohres Material in die den Heizdraht aufnehmende Rille eindringen, wodurch sich der Wärmeübergang zu den Rohrabschnitten verschlechtert, die im Zwischenbereich der Rillen der Muffeninnenwand benachbart sind.

Um den Heizdraht in der Muffe aus Kunststoff einzubetten, hat man bereits versucht, den Widerstandsdraht auf einen Kern aufzuwickeln und dann den Kern mit einer Hohlform zu umgeben, die zusammen mit dem Kern die Ausbildung des Muffenkörpers erlaubt. Diese Verfahrensweise ist ersichtlich ausserordentlich kompliziert und erfordert für die Herstellung der Rohrmuffe jeweils einen gesonderen Formvorgang.

Es ist auch bekannt (EP-A-2799), zur Einbettung von Verstärkungsfasern in einen Kunststoff mittels einer Schneide einen Einschnitt einzubringen, in den dann die Verstärkungsfasern eingelegt werden, und dann durch eine Glätteinrichtung die durch die Schneide aufgeworfenen Wülste über die eingebetteten Glasfasern zusammenzudrücken; jedoch ist es hierbei erforderlich, den Kunststoff insofern einer speziellen Behandlung zu unterziehen, als die Oberfläche, in die die Einbettung stattfinden soll, zuvor erweicht werden muss. Lediglich im Falle eines Duroplasten erfolgt die Einbettung vor Aushärtung des Kunststoffmaterials.

Aufgabe der Erfindung ist es, einen Heizdraht in einfacher Weise so in eine Rohrmuffe einzubetten, dass eine gute Verankerung des Drahts innerhalb der Muffe gewährleistet und dabei doch beschränkt Hohlräume belassen werden, die eine Verdrängung des schmelzflüssig werdenden Materials beim Schweissvorgang erlauben.

Eine zweckmässige Vorrichtung zur Lösung der Aufgabe ist durch die im Patentanspruch 1 enthaltenen Merkmale gekennzeichnet, wobei Weiterbildungen der Vorrichtung durch die in den Unteransprüchen enthaltenen Merkmale gekennzeichnet sind.

Nach der Erfindung wird lediglich ein Einschnitt in den Muffenkörper eingebracht, ohne dass das Material selbst herausgearbeitet wird. Danach wird der Einschnitt aufgespreizt und der Heizdraht eingelegt, wodurch die Schnittkanten des Einschnitts komprimiert werden und auch elastisch federnd nach hinten ausweichen. Nach dem Einlegen des Heizdrahts liegen die Zungen aufgrund der aufgebauten Rückstellkräfte unter Kraft am Heizdraht an, den sie überlappen, so dass sich sowohl ein form- wie auch ein kraftschlüssiger Halt des Heizdrahts innerhalb des Einschnitts aufgrund der zungenartigen Schnittkanten ergibt. Gesonderte Mittel zur Halterung des Heizdrahtes, wie etwa ein Kleber u. dgl. sind somit entbehrlich. Zwischen den nach Einlegen des Heizdrahtes aufgeworfenen zungenartigen Schnittkanten verbleiben Kerben, die Raum für beim Schweissvorgang schmelzflüssig gewordenen Kunststoff bieten. Es wird somit verhindert, dass Kunststoffmaterial zum Ende des rohrförmigen Kunststoffteiles hin verdrängt wird. Ferner ergibt sich durch diese Kerben eine innige Verbindung zwischen Rohrmuffe und Rohr infolge Verzahnung beider Teile.

Nachfolgend werden Ausführungsbeispiele der Erfindung anhand der Zeichnung beschrieben. Darin zeigen:

Fig. 1 einen Schnitt durch einen rohrförmigen Kunststoffteil zur Verbindung von zwei aus Kunststoff bestehenden Rohren;

Fig. 2 einen vergrösserten Teilschnitt aus dem rohrförmigen Kunststoffteil nach Fig. 1;

Fig. 3 eine etwas abgeänderte Ausführungsform in einem Ausschnitt entsprechend Fig. 2;

Fig. 4 eine perspektivische schematische Darstellung einer Vorrichtung, mit der ein Heizdraht in einen rohrförmigen Kunststoffteil nach Fig. 1 eingebettet werden kann; und in

Fig. 5 eine abgeänderte Ausführungsform des Schneidkopfes mit Andruckrollen.

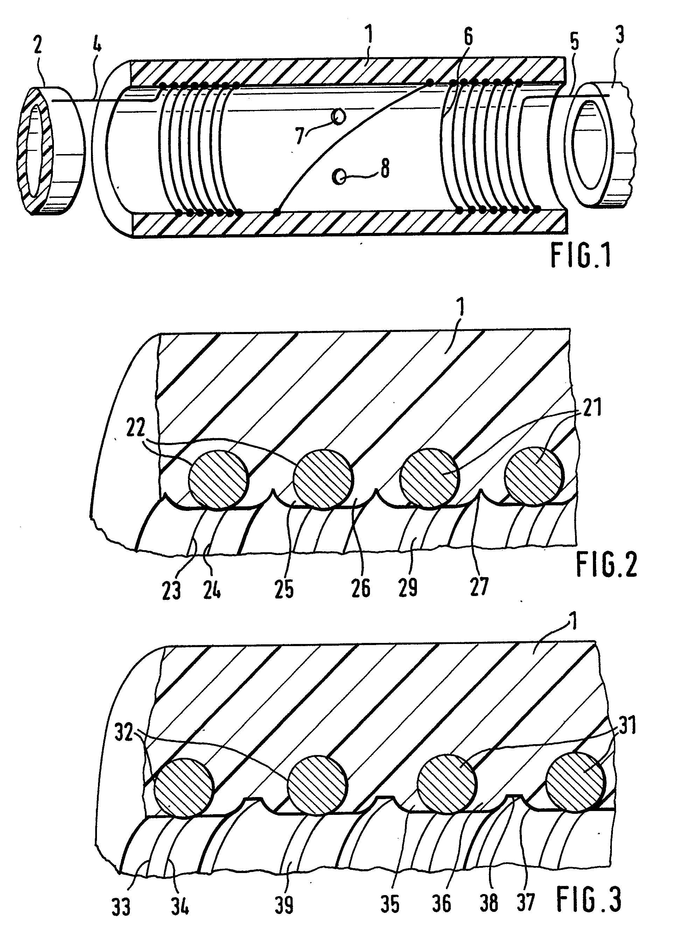

In Fig. 1 ist mit 1 ein ringförmiger Kunststoffteil bezeichnet, mit dem zwei aus Kunststoff bestehende Rohre 2 und 3 verbunden werden sollen.

Ein Anschluss 4 eines elektrischen Heizdrahtes, der längs einer Wendel an der an den zu verbindenden Rohren 2, 3 anzulegenden Seite des Kunststoffteiles 1 eingelegt ist und in der Mitte einen Teil mit flacher Steigung aufweist, wird ebenso wie der Anschluss 5, der die Fortsetzung des Heizdrahtes 6 bildet, an eine Stromquelle angelegt, die nach dem Einschieben der Enden der Rohre 2 und 3 eingeschaltet wird, so dass sich der Heizdraht 6 erwärmt. Damit wird das die Heizdrahtwendel umgebende Kunststoffmaterial sowohl am Kunststoffteil 1 als auch an den Enden der Rohre 2 und 3 geschmolzen und miteinander verschweisst, wodurch die Verbindung zwischen Rohr 2, Kunststoffteil 1 und Rohr 3 hergestellt ist.

Die Noppen 7 und 8 können nach Verlegen der Heizdrahtwendel im Inneren des rohrförmigen Kunststoffteiles so ausgebildet werden, dass sie den flacheren Teil der Wendel zwischen sich aufnehmen. Es ist also möglich, bei dieser Art der Verlegung der Heizdrahtwendel von einem Mittelsteg abzusehen, der bisher als Anschlag für die Enden der Rohr 2 und 3 in solchen rohrförmigen Kunststoffteilen vorgesehen werden musste und damit die durchgehende Verlegung einer Heizdrahtwendel im Inneren eines solchen rohrförmigen Kunststoffteiles unmöglich machte. Vielmehr musste bisher in jeder Hälfte des rohrförmigen Kunststoffteiles eine gesonderte Wendel verlegt werden, wobei die beiden Wendelenden jeweils nach aussen geführt worden sind.

In Fig. 2 ist ein Ausschnitt aus dem Bereich des Kunststoffteiles 1 dargestellt, in dem die Heizdrahtwendel mit vergleichweise steiler Steigung verläuft.

Man erkennt den Heizdraht 21, der in einen furchenartigen Einschnitt 22 verlegt ist, dessen Schnittkanten 23, 24 die Enden von Zungen 25, 26 bilden, die den Heizdraht 21 überlappen, wobei die Zungen bei dieser Ausführungsform innen in einer steilen Kerbe 27 aneinanderstossen, die Raum für beim Schweissvorgang schmelzflüssig gewordenen Kunststoff bietet. Der Heizdraht 21 liegt in einem schmalen Bereich 29 frei, so dass er dort auf dem eingeschobenen Ende eines Rohres unmittelbar aufliegt.

Bei der Ausführungsform nach Fig. 3 ist der Heizdraht 31 in Einschnitte 32 verlegt. Auch hier bilden die Schnittkanten 33, 34 die Enden von Zungen 35, 36, die den Heizdraht 31 überlappen, wobei die vom Heizdraht 31 abgewendeten Enden der Zungen 35, 36 in eine breitere Rinne 38 übergehen, die somit mehr Raum für das beim Verschweissen schmelzflüssig werdende Material gibt. Das Material von Rohrende und rohrförmigem Kunststoffteil kann sich also unter Ausnützung des zur Verfügung stehenden Raumes innig miteinander verbinden ohne dass irgenwelches Kunststoffmaterial zum Ende des rohrförmigen Kunststoffteiles hin verdrängt werden müsste. Auch bei der Ausführungsform nach Fig. 3 liegt

ein Abschnitt 39 des Heizdrahtes 31 zwischen den Schnittkanten 33, 34 frei.

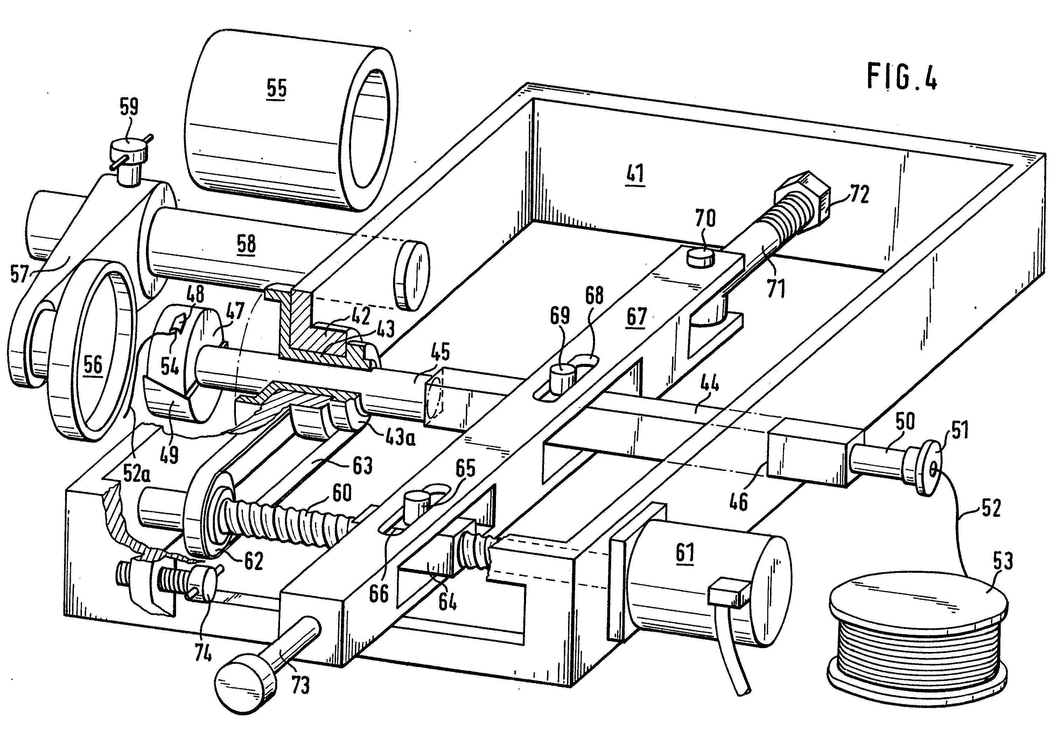

Fig. 4 zeigt eine bevorzugte Vorrichtung zum Einbetten eines Heizdrahtes in einen rohrförmigen Kunststoffteil, beispielsweise eine Muffe oder Doppelmuffe.

Mit 41 ist ein kastenförmiger Rahmen bezeichnet, der bei 42 ein Lager zur drehbaren Aufnahme eines Mitnehmers 43 aufweist. Einen unrunden, vorzugsweise quadratischen Querschnitt aufweisende Vorschubstange 44 geht in einen Wellenteil 45 über, der im drehbar gelagerten Mitnehmer 43 so gelagert ist, dass sich der Mitnehmer 43 auf dem Wellenteil 45 frei drehen kann. Bei 46 ist im kastenförmigen Rahmen 41 eine unverdrehbare Lagerung für die Vorschubstange 44 vorgesehen. Der Wellenteil 45 dient als Träger für einen Schneidkopf 47, der mit einer pflugscharartigen Schneide 48 versehen ist. Eine Spreizvorrichtung 49 ist fest an einer Schubstange 50 befestigt, die einen Betätigungsknopf 51 aufweist. Die Schubstange 50 ist hohl und führt den Heizdraht 52, der von einer Vorratsspule 53 kommt und in der Schubstange 50 bis zum Schneidkopf 47 verläuft, wo er aus einer Öffnung 54 unmittelbar hinter der Schneide 48 radial nach aussen austritt. Das dort austretende Ende des Heizdrahtes ist mit 52a bezeichnet.

Die mit der Heizdrahtwendel zu versehende Muffe 55 wird zwischen den Mitnehmer 43 und einen drehbar gelagerten Gegenhalter 56 eingesetzt, der an einem Arm 57 sitzt, welcher an einer Säule 58 zur Anpassung an verschieden langen Muffen 55 ortsverschieblich gelagert und durch eine Feststellschraube 59 fixierbar ist. Mitnehmer 43 und Gegenhalter 56 bilden somit eine Einspannvorrichtung für die Muffe 55.

Der drehbar gelagerte Mitnehmer 43 wird angetrieben und nimmt die Muffe 55 mit, die durch den Gegenhalter 56 unter der Wirkung einer nicht sichtbaren Feder gegen den Mitnehmer 43 angedrückt wird. Somit kann sich die Muffe 55 drehen und zwar auch gegen den Widerstand, der durch das Einschneiden der pflugscharartigen Schneide 48 in die Innenoberfläche der Muffe 55 ausgeübt wird.

Der aus dem Schneidkopf 47 und der Spreizvorrichtung 49 bestehende Teil muss sich in Achsrichtung der Vorschubstange 44 verschieben lassen, damit ein Vorschub pro Umdrehung der Muffe 55 entsteht und der Heizdraht 52 in programmierter Wendelform eingebettet wird.

Dieser Vorschub wird erzeugt mit Hilfe einer Spindel 60, die von einem Motor 61 angetrieben wird, der über eine auf der Spindel 60 sitzende Riemenscheibe 62 und den Riemen 63 auch den Mitnehmer 43 über einen an ihm fest ausgebildeten riemenscheibenartigen Teil 43a und damit auch die Muffe 55 antreibt, so dass eine Kopplung zwischen Vorschub und Drehbewegung der Muffe 55 entsteht.

Auf der Spindel 60 sitzt frei verschieblich eine Mitnehmerhülse 64 mit einem Zapfen 65, der in ein Langloch 66 in einem Übersetzerbalken 67 eingreift. Dieser Übersetzerbalken weist ein zweites Langloch 68 auf, durch das ein Zapfen 69 auf der Vorschubstange 44 greift.

Der Übersetzerbalken 67 ist auf einem Drehzapfen 70 an einem längs verstellbaren Gegenlager 71 gelagert, das mit Hilfe einer Mutter 72 am kastenförmigen Rahmen 41 fixiert werden kann. Da das Gegenlager 71 verstellbar ist, kann das Übersetzungsverhältnis der Strecke vom Drehzapfen 70 zum Zapfen 69 zu der Strecke vom Zapfen 69 zum Zapfen 65 verändert werden. Die auf der Spindel 60 frei verschiebbare Mitnehmerhülse 64 kann auf der Spindel 60 mit Hilfe einer Mitnehmerraste 73 eingerückt werden.

Ist die Mitnehmerraste 73 eingerückt und der Motor 61 angeschaltet, dann bewegt sich die Mitnehmerhülse 64 längs der Spindel 60 und bewegt damit auch den Übersetzerbalken 67 und den Drehzapfen 70, so dass über den Zapfen 69 die Vorschubstange 44 entsprechend der Steigung der Spindel 60 und des Hebelverhältnisses der Strecke zwischen Drehzapfen 70 und Zapfen 69 zur Strecke zwischen Zapfen 69 und Zapfen 65 in Achsrichtung der Vorschubstange 44 verschoben wird. Ausserdem erfolgt bei eingeschaltetem Motor 61 der Antrieb des Mitnehmers 43 und damit der Muffe 55 über die an der Spindel 60 feste Riemenscheibe und den Riemen 63, der über den entsprechend riemenscheibenartig ausgebildeten Teil 43 gelegt ist.

Die Spindel 60 weist mittig einen Bereich flacherer Steigung auf, so dass der entsprechend flache Teil der Heizdrahtwendel 6 in dem Kunststoffteil 1 nach Fig. 1 entsteht. Dort werden dann später die Noppen 7, 8 vorgesehen, beispielsweise eingedrückt, die als Innenanschlag für die eingeschobenen Enden der zu verbindenden Rohre 3, 4 dienen. 74 ist ein verstellbarer Anschlag für die Bewegung der Mitnehmerhülse 64 auf der Spindel 60, der vorgesehen ist, um den Lauf der Mitnehmerhülse auf der Spindel entsprechend der Rohrlänge zu beeinflussen. Ein entsprechender Anschlag kann auch auf der anderen Seite des Mitnehmerbalkens 67 an dem kastenförmigen Rahmen 41 vorgesehen sein.

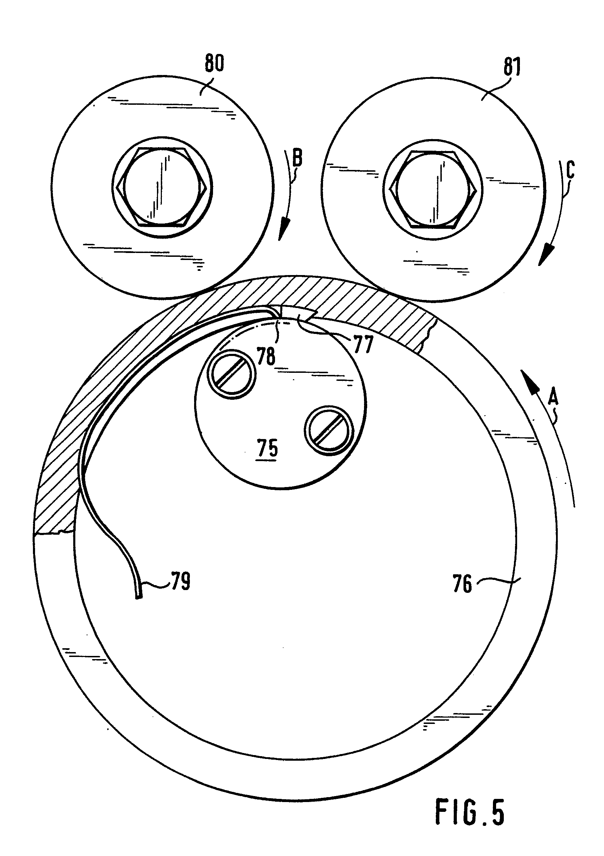

In Fig. 5 ist eine etwas abgeänderte Ausführungsform des Schneidkopfes wiedergegeben. Der Schneidkopf 75 sitzt hier ausmittig zum rohrförmigen Kunststoffteil 76, trägt aber ebenfalls eine pflugscharartige Schneide 77, die in die Innenoberfläche des rohrförmigen Kunststoffteiles 76 einschneidet. Aus einer Öffnung 78 hinter der pflugscharartigen Schneide 77 tritt der Heizdraht aus, dessen Anfang bei 79 erkennbar gemacht ist. Beim Umlauf des rohrförmigen Kunststoffteiles 76 in Richtung des Pfeiles A schneidet die pflugscharartige Schneide 77 in die Innenoberfläche des rohrförmigen Kunststoffteiles 76 ein, so dass sich eine Furche aufspreizt, in die der Heizdraht eingelegt wird. Die aufgespreizte Furche wird nach dem Einlegen durch den Schneidkopf 75 wieder geschlossen. Der Kunststoffteil 76 wird durch die Andrückrollen 80, 81 gegen den Schneidkopf 75 angedrückt. Dabei sorgt die Andrückrolle 81 dafür, dass die Schneide 77 in die Innenoberfläche des rohrförmigen Kunststoffteiles 76 ausreichend eindringt, während die Rolle 80 dafür sorgt, dass der Schneidkopf 75 gegen das Widerlager der Andrückrolle 80 die aufgespreizte Furche wieder schliessen kann. Die Andrückrollen 80 und 81 brauchen nicht angetrieben zu sein. Sie laufen durch ihren Reibungsschluss mit der Oberfläche des Kunststoffteiles 76 im allgemeinen in Richtung der Pfeile B und C um.

Die Anordnung nach Fig. 5 eignet sich insbesondere zum Einlegen eines Heizdrahtes in die Innenoberfläche einer Muffe mit grossem Durchmesser.

Das Erfindungsprinzip ist selbstverständlich auch auf das Einlegen von Heizdrähten in die Oberflächen nicht rotationssymmetrischer Kunststoffkörper anwendbar. In diesem Falle wird ein Schneidkopf mit pflugscharartiger Schneide, gesteuert z.B. über ein entsprechendes Modell in gewünschter Weise über den mit dem Draht zu belegenden Kunststoffkörper geführt.

**Patentansprüche**

1. Vorrichtung zum Einbetten eines elektrischen Heizdrahtes in eine in der Innenoberfläche einer hülsenförmigen Muffe (55) angeordneten Nut, mit einer Einspannvorrichtung (43, 56) für die Muffe, einen auf einem Träger (45) aufgenommenen Schneidkopf (47) mit einer Schneide (48) zur Einarbeitung der Nut sowie mit einer Einrichtung (54) zum Einlegen des Heizdrahtes in die Nut, dadurch gekennzeichnet, dass die Schneide (48) pflugartig ausgebildet ist, mit dem Träger (45) des Schneidkopfes (47) ein einseitig schwenkbar gelagerter (bei 70) übersetzter Balken (67) verbunden ist, der mit einer Mitnehmerhülse (64) gekoppelt ist, die auf einer Spindel (60) geführt ist, deren Steigung ein Modell des Verlegungsverlaufes des Heizdrahtes (52) im Inneren der Muffe (55) ist, und dass eine hinter dem Schneidkopf (47) angeordnete Spreizvorrichtung (49) zum Aufspreizen der Schnittkanten des durch die Schneide (48) gebildeten Einschnittes vorgesehen ist.

2. Vorrichtung nach Anspruch 1, dadurch gekennzeichnet, dass die Mitnehmerhülse (64) auf der Spindel (60) frei verschiebbar und im Übersetzerbalken (67) eine Mitnehmerraste (73) zum Einrasten der Mitnehmerhülse (64) in das Gewinde der Spindel (46) vorgesehen ist.

3. Vorrichtung nach Anspruch 1 oder 2, dadurch gekennzeichnet, dass der Übersetzerbalken (67) am von der Mitnehmerhülse (64) abgewendeten Ende an einem verstellbaren Gegenlager (70, 71) gelagert ist.

4. Vorrichtung nach einem der Ansprüche 1 bis 3, dadurch gekennzeichnet, dass der Schneidkopf (47) auf einer verschiebbar in einem drehbar angetriebenen Mitnehmer (43) für die Muffe (55) gelagerten Vorschubstange (44) angeordnet ist, welche mit dem Übersetzerbalken (67) durch einen in einem Langloch (68) verschiebbaren Zapfen (69) gekoppelt ist.

**Claims**

1. An apparatus for embedding an electrical heating wire in a groove disposed in the inner surface of a sleeve-shaped socket (55), comprising a chucking device (43, 56) for the socket, a cutter head (47) taken up by a carrier (45) and having a cutting edge (48) for working in the groove, and a means (54) for laying the heating wire in the groove, characterized in that the cutting edge (48) has a plough shape, a cantilevered pivoted transmitted (at 70) girder (67) is connected to the carrier (45) of the cutter head (47) and coupled with a driving sleeve (64) conducted on a spindle (60) whose pitch is a model of the laying pattern of the heating wire (52) in the interior of the socket (55), and in that a spreading device (49) disposed behind the cutter head (47) is provided for spreading the cut edges of the notch formed by the cutting edge (48).

2. An apparatus according to claim 1, characterized in that the driving sleeve (64) is freely displaceable on the spindle (60) and a driver catch (73) is provided in the transmitter girder (67) for locking the driving sleeve (64) in the thread of the spindle (46).

3. An apparatus according to claim 1 or 2, characterized in that the transmitter girder (67) is mounted at the end facing away from the driving sleeve (64) on an adjustable abutment (70, 71).

4. An apparatus according to any of claims 1 to 3, characterized in that the cutter head (47) is disposed on a feed bar (44) mounted displaceably in a rotatably driven driver (43) for the socket (55) and coupled with the transmitter girder (67) by a trunnion (69) displaceable in a slot (68).

**Revendications**

1. Dispositif d'encastrement d'un fil chauffant électrique dans une rainure ménagée dans la surface intérieure d'un manchon (55) en forme de douille, qui comprend un dispositif de maintien (43, 56) du manchon, une tête coupante (47) montée sur un support (45) et comportant un tranchant (48) pour l'usinage de la rainure et un dispositif (54) pour l'insertion du fil chauffant dans la rainure, caractérisé en ce que le tranchant (48) a la forme d'un soc de charrue, que le support (45) de la tête coupante (47) est une poutrelle en déport (67) montée de manière à pouvoir pivoter d'un côté (en 70) et couplée à une douille d'entraînement (64) et guidée sur une broche (60) dont le pas correspond à la progression du fil chauffant (52) à l'intérieur du manchon (55) et en ce qu'un dispositif d'écartement (49) situé derrière la tête coupante (47) assure l'écartement des bords de l'entaille faite par le tranchant (48).

2. Dispositif selon la revendication 1, caractérisé en ce que la douille d'entraînement (64) peut se déplacer librement sur la broche (60) et que la poutre en déport (67) comporte un cran d'entraînement (73) pour l'engagement de la douille d'entraînement (64) dans le filetage de la broche (46).

3. Dispositif selon l'une des revendications 1 ou 2, caractérisé en ce que la poutre de déport (67) est montée sur palier sur une butée réglable (70, 71) à son extrémité la plus éloignée de la douille d'entraînement (64).

4. Dispositif selon l'une des revendications 1 à 3, caractérisé en ce que la tête coupante (47) est montée sur une barre d'avance (44) qui peut se déplacer dans un dispositif d'entraînement (43) du manchon (55) entraîné en rotation et qui est accouplée avec la poutre de déport (67) au moyen d'un tenon (69) qui peut se déplacer dans un trou oblong (68).

FIG.1

FIG.2

FIG.3

FIG.4

55

59

57

58

56

54

49

52a

48

47

42

43

45

63

60

62

74

73

66

65

64

69

68

67

44

41

70

71

72

61

46

50

51

52

53

0 086 359

6

FIG.5